# EUROPÄISCHE PATENTANMELDUNG

(11) **EP 4 492 511 A1**
(43) Veröffentlichungstag der Anmeldung: **15.01.2025**
(21) Anmeldenummer: 24183066.0
(22) Anmeldetag: 19.06.2024
(51) Int. Cl.: H01M 8/04089, H01M 8/0438, H01M 8/04746, H01M 8/10

(54) **ANODENMODUL UND POLYMERELEKTROLYTBRENNSTOFFZELLENSYSTEM**

(30) Priorität: 05.07.2023 DE 102023117736
(71) Anmelder: Deutsches Zentrum für Luft- und Raumfahrt e.V., 53227 Bonn (DE)
(72) Erfinder: Becker, Florian, 22129 Hamburg (DE)
(74) Vertreter: VKK Patentanwälte PartG mbB

(57) **Zusammenfassung**

Um ein Anodenmodul (1) für ein Polymerelektrolytbrennstoffzellensystem (5) mit einer Anode (23) und einer Kathode (24), umfassend mindestens einen Einlass (2) zur Einleitung von Betriebsgas in eine Betriebsgasleitung (3) und einen mit der Betriebsgasleitung (3) kommunizierenden Anodenauslass (4) zum Anschließen an einen Anodeneingang (6) des Polymerelektrolytbrennstoffzellensystems (5), wobei die Betriebsgasleitung (3) mit Differenzdruckregelungsmitteln (13) zum Regeln einer vorgegebenen Druckdifferenz der Betriebsgasleitung (3) am Anodenauslass (4) gegenüber der Kathode (24) versehen ist, wobei die Differenzdruckregelungsmittel (13) einen Signaleingang (33) für ein einen Kathodendruck kennzeichnendes Steuersignal und Stellmittel (39, 40) zum Beeinflussen eines Betriebsgasdrucks in der Betriebsgasleitung (3) aufweisen, und ein Polymerelektrolytbrennstoffzellensystem (5) anzugeben, welche einen sicheren, das Brennstoffzellensystem schädigende Zustände auch bei einem plötzlichen Druckverlust auf der Kathodenseite und/oder auf der Anodenseite vermeidenden Betrieb gewährleisten, wird vorgeschlagen, dass Druckausgleichsmittel (43, 34, 29, 30, 15) zum Ausgleichen eines sprunghaften Ansteigens des Betrags der Druckdifferenz vorgesehen sind.

## Beschreibung

Die vorliegende Erfindung betrifft ein Anodenmodul für eine Polymerelektrolytbrennstoffzellensystem mit einer Anode und einer Kathode, umfassend mindestens einen Einlass zur Einleitung von Betriebsgas in eine Betriebsgasleitung und einen mit der Betriebsgasleitung kommunizierenden Anodenauslass zum Anschließen an einen Anordnungseingang des Polymerelektrolytbrennstoffzellensystems, wobei die Betriebsgasleitung mit Differenzdruckregelungsmitteln zum Regeln einer vorgegebenen Druckdifferenz der Betriebsgasleitung am Anodenauslass gegenüber der Kathode versehen ist, wobei die Differenzdruckregelungsmittel einen Signaleingang für ein einen Kathodendruck kennzeichnendes Steuersignal und Stellmittel zum Beeinflussen eines Betriebsgasdrucks in der Betriebsgasleitung aufweisen.

Gleichermaßen betrifft die vorliegende Erfindung ein Polymerelektrolytbrennstoffzellensystem mit einem Anodenmodul.

Bei einem Polymerelektrolytbrennstoffzellensystem (nachfolgend auch PEM-Brennstoffzellensystem genannt) wird der Kathodenseite meistens Umgebungsluft zugeführt, wohingegen der Anodenseite Wasserstoff aus einem Speichersystem zugeführt wird. Um einen degradationsarmen und gleichzeitig stabilen Systembetrieb zu gewährleisten, muss das Anodenmodul der eingangs genannten Art geeignet ausgestaltet sein. Insbesondere muss der Druck des Wasserstoffspeichersystems reduziert werden. Ferner muss der Differenzdruck zwischen der Anodenseite des PEM-Brennstoffzellensystems und dessen Kathodenseite auf einen vorgegebenen Wert eingeregelt werden. Für einen ordnungsgemäßen Betrieb, der insbesondere auch eine Schädigung der Brennstoffzellenmembranen vermeidet, sollte der Differenzdruck zwischen der Anodenseite des Brennstoffzellenstacks und der Kathodenseite im Bereich 200 mbar bis 300 mbar liegen. Außerhalb dieses Differenzdruckbereichs kann es zu einem mechanischen Defekt der Zellmembranen kommen und ein übermäßiger Sauerstoff und/oder Stickstoff-Crossover von der Kathode zur Anode auftreten. Um die Druckdifferenz in dem genannten Intervall zu halten, muss der Druck aufgrund technisch bedingter Schwankungen in der Zufuhr von Wasserstoff auf der einen Seite und der Abfuhr von Sauerstoff auf der Kathodenseite stets eingeregelt werden. Üblicherweise werden dafür im Stand der Technik Differenzdruckregelventile verwendet. Diese dienen dazu, den anodenseitigen Wasserstoffdruck am Eingang des PEM-Brennstoffzellensystems zu regeln, um die Druckdifferenz zwischen Anodenseite und Kathodenseite des PEM-Brennstoffzellensystems möglichst konstant in dem genannten Intervall zu halten. Insbesondere wird das Differenzdruckregelventil über eine Pilotleitung mit dem Kathodensystem verbunden. Der kathodenseitige Druck dient dann als Stellgröße an das Differenzdruckregelventil.

Die bekannten Systeme sind jedoch mit Nachteil nicht in der Lage, die Brennstoffzellenmembranen schädigende Zustände zu vermeiden, wenn außergewöhnliche Ereignisse eintreten, wie etwa ein plötzlicher Druckabfall infolge eines Defekts auf der Kathodenseite oder auf der Anodenseite.

Vor dem geschilderten Hintergrund liegt der vorliegenden Erfindung die Aufgabe zugrunde, ein Anodenmodul der eingangs genannten Art gleichermaßen wie ein Polymerelektrolytbrennstoffzellensystem der eingangs genannten Art anzugeben, welche einen sicheren, das Brennstoffzellensystem schädigende Zustände auch bei einem plötzlichen Druckverlust auf der Kathodenseite und/oder auf der Anodenseite vermeidenden Betrieb gewährleisten.

Erfindungsgemäß wird diese Aufgabe bei einem gattungsgemäßen Anodenmodul dadurch gelöst, dass Druckausgleichsmittel zum Ausgleichen eines sprunghaften Ansteigens des Betrages der Druckdifferenz vorgesehen sind. Die Druckausgleichsmittel vermögen erfindungsgemäß bei Betriebszuständen, insbesondere beim Auftreten von Druckdifferenzen, welche die Differenzdruckregelungsmittel nur unzureichend bzw. nur verzögert in den Sollbereich zurückzuführen vermögen, eingreifen. Insbesondere bei einem plötzlichen Druckabfall auf der Kathodenseite vermögen die erfindungsgemäßen Druckausgleichsmittel durch einen Ausgleich des Drucks auf der Anodenseite den Sollbereich für die Druckdifferenz kurzfristig anzugleichen. Demgegenüber vermögen die vorbekannten Systeme den Anodendruck nicht aktiv zu senken. Stattdessen kann der Anodendruck bei den vorbekannten Systemen nur allmählich dadurch reduziert werden, dass das Anodengas, also Wasserstoff, durch die Brennstoffzelle verbraucht wird. Die Reaktionszeit ist jedoch häufig zu langsam, um eine Schädigung der Membranen zu vermeiden oder bedarf einer aktiven Regelung bspw. durch das Öffnen eines Spülventils.

In vorteilhafter Ausgestaltung der Erfindung sind die Druckausgleichsmittel zum Abführen von Betriebsgas in die Umgebung ausgestaltet. Mit Vorteil lässt sich auf diese Weise in Reaktion auf einen plötzlichen Druckabfall auf der Kathodenseite, etwa infolge eines technischen Defekts, schnell auch der anodenseitige Druck absenken, um die Druckdifferenz in einen Bereich zurückzuführen, welcher eine Schädigung der Brennstoffzellenmembranen vermeidet. Durch das Abführen von Betriebsgas in die Umgebung kann der anodenseitige Druck erheblich schneller passiv und automatisiert abgesenkt werden. Im Stand der Technik geht dies lediglich durch den Verbrauch des Anodengases durch die elektrochemische Reaktion oder durch die aktive Ansteuerung eines Ventils für die Druckentlastung.

In diesem Zusammenhang umfassen die Druckausgleichsmittel in bevorzugter Ausgestaltung der Erfindung eine Entlüftungsleitung für Betriebsgas.

Bevorzugt kommuniziert die Entlüftungsleitung unmittelbar mit der Umgebung. Dies bedeutet, dass die Entlüftungsleitung insbesondere nicht stromaufwärts von weiteren Komponenten des Anodenmoduls angeschlossen ist, um ein zügiges Abführen des Betriebsgases sicherzustellen.

In einer besonders bevorzugten Ausführungsform des erfindungsgemäßen Anodenmoduls ist der Signaleingang als mit der Kathode kommunizierende Pilotgasleitung ausgestaltet. Die Pilotgasleitung stellt dabei sicher, dass der kathodenseitige Druck als Stellgröße dem Differenzdruckregelungsmitteln zugeführt wird. Somit ist eine passive Regelung möglich, welche auch im Störfall einer Steuerung oder bei einem Ausfall der elektrischen Energieversorgung zu einem Aufrechterhalten des Differenzdrucks im dem vorgegebenen Intervall, beispielsweise zwischen 200 und 300 mbar, zu gewährleisten. Um in einem Störfall auch bei einem Ausfall der elektrischen Energieversorgung eine Schädigung der Brennstoffzellenmembranen durch Überdruck wirksam zu verhindern, sieht eine Weiterbildung des erfindungsgemäßen Anodenmoduls vor, dass die Druckausgleichsmittel zum selbsttätigen Ausgleichen in Reaktion auf das sprunghafte Ansteigen ausgebildet sind.

Besonders vorteilhaft ist es in Weiterbildung des erfindungsgemäßen Anodenmoduls, wenn die Druckausgleichsmittel mit den Stellmitteln, insbesondere mechanisch, in Wirkverbindung stehen. Auf diese Weise vermag etwa ein im Stand der Technik bereits übliches Druckdifferenzregelungsventil durch Auslenkung des als Membran ausgestalteten Stellglieds die erfindungsgemäßen Druckausgleichsmittel zu aktivieren. Beispielsweise kann im Rahmen der Erfindung eine Auslenkung der Membran eines Differenzdruckregelungsventils über eine bestimmte Schwelle hinaus die Druckregelungsmittel aktivieren, beispielsweise, um Anodenbetriebsgas in die Umgebung zu leiten und auf diese Weise selbsttätig den Differenzdruck zwischen Kathode und Anode des PEM-Brennstoffzellensystems auch bei einem plötzlichen Druckabfall auf der Kathodenseite rasch in einen tolerablen Bereich zurückzuführen.

Insbesondere können in vorteilhafter Ausgestaltung des erfindungsgemäßen Anodenmoduls die Druckausgleichsmittel mit den Differenzdruckregelungsmitteln integriert ausgestaltet sein, wobei die Differenzdruckregelungsmittel vorzugsweise als rücksteuerbares Differenzdruckventil ausgestaltet sind. Bei einem rücksteuerbaren Differenzdruckventil erfolgt für den Fall, dass der Anodendruck sich um mehr als die tolerable Druckdifferenz zwischen Anode und Kathode von dem Kathodendruck unterscheidet, eine Auslenkung der Membran derart möglich, dass ein Rücksteuerventil geöffnet wird, über welches Druck in dem zu regelnden Gasstrom, hier also des Betriebsgases, rasch abgebaut werden kann und ein ausfallsicherer Betrieb gewährleistet werden kann.

In einer Variante des erfindungsgemäßen Anodenmoduls lässt sich der Differenzdruck im Systembetrieb automatisiert verändern. Dies ist bspw. durch die Substitution des Handrades durch einen entsprechenden Differenzdruckregler mit einem Schrittmotor möglich. Diese Erweiterung hat keinen Einfluss auf den ausfallsicheren Betrieb.

In einer weiteren Variante des erfindungsgemäßen Anodenmoduls ist vorgesehen, dass die Druckausgleichsmittel zum Zuführen von Betriebsgas, insbesondere eines Inertgases, vorzugsweise Stickstoff, in die Betriebsgasleitung ausgestaltet sind. Dadurch vermag das erfindungsgemäße Anodenmodul mit Vorteil bei einem Ausfall der Wasserstoffversorgung einem infolgedessen auftretenden kathodenseitigen Überdruck bzw. einer Wasserstoffverarmung entgegenzuwirken.

Eine andere vorteilhafte Maßnahme, um auf einen kathodenseitigen Überdruck zu reagieren, sieht erfindungsgemäß vor, dass bei dem erfindungsgemäßen Anodenmodul die Druckausgleichsmittel zum Öffnen einer zwischen die Anode und die Kathode des Polymerelektrolytbrennstoffzellensystems geschalteten elektrischen Spannungsbegrenzungslast ausgestaltet sind. Der Vorteil ist, dass auf diese Weise einer Degradierung der Membranen wirksam entgegengewirkt werden kann, wenn ein kathodenseitiger Überdruck infolge eines Ausfalls der Wasserstoffversorgung auf der Anodenseite auftritt.

Die auf ein Polymerelektrolytbrennstoffzellensystem der eingangs genannten Art gerichtete Aufgabe wird gelöst durch ein derartiges System, bei welchem das Anodenmodul nach einem der Patentansprüche 1 bis 10 ausgestaltet ist.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: schematische Darstellung eines Anodenmoduls in einer bevorzugten Ausführungsform der Erfindung, welche an ein PEM-Brennstoffzellenmodul angeschlossen ist;
- Figur 2:: schematische Darstellung in einem Vertikalschnitt durch eine bevorzugte Ausgestaltungsform eines Differenzdruckreglers eines erfindungsgemäßen Anodenmoduls;
- Figur 3:: schematische Darstellung des Verlaufs eines beispielhaften Verfahrens mit einem Anodenmodul gemäß der Erfindung.

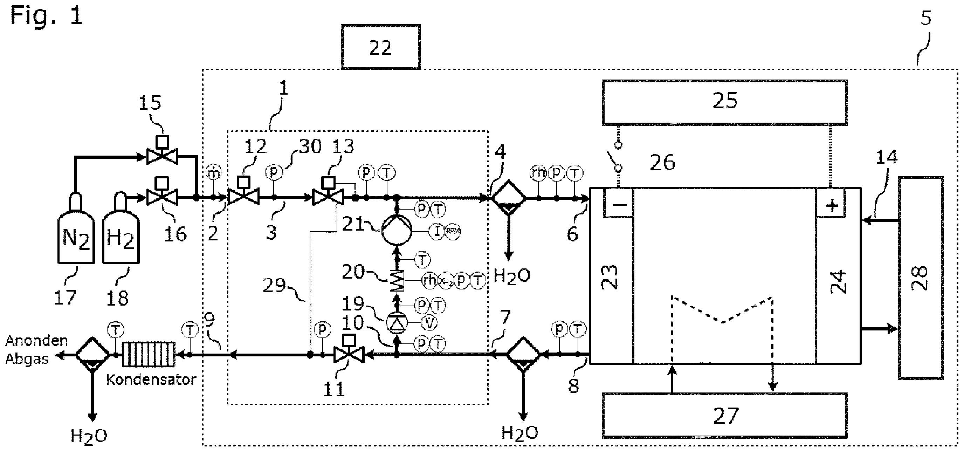

Die Figur 1 zeigt schematisch ein Anodenmodul 1 in einer bevorzugten Ausgestaltung der Erfindung. Das Anodenmodul 1 weist einen Einlass 2 für Betriebsgas in eine Betriebsgasleitung 3 auf. Weiter weist das Anodenmodul 1 einen Anodenauslass 4 auf. Der Anodenauslass 4 ist an einen Anodeneingang 6 an ein PEM-Brennstoffzellenstapel 5 angeschlossen. Der PEM-Brennstoffzellenstapel 5 ist nur schematisch dargestellt. Es besteht aus einem Stapel Einzelzellen, von denen in der schematischen Darstellung gemäß Figur 1 nur eine Einzelzelle zu erkennen ist. Weiter weist das Anodenmodul 1 einen Anodenabgaseinlass 7 auf, welcher mit einem Anodenabgasauslass 8 des PEM-Brennstoffzellensstapels 5 verbunden ist.

Das Anodenmodul 1 weist weiter eine Anodenabgasauslassleitung 9 auf. Der Anodenabgaseinlass 7 des Anodenmoduls 1 kommuniziert über eine Rezirkulationsleitung 10 mit der Betriebsgasleitung 3 und dem Anodenauslass 4 des Anodenmoduls 1. Die Anodenabgasauslassleitung 9 des Anodenmoduls 1 weist stromabwärts von der Rezirkulationsleitung 10 ein linear ansteuerbares Spülventil 11 auf. In der Betriebsgasleitung 3 ist stromaufwärts von der Rezirkulationsleitung 10 und stromabwärts von einem Versorgungsventil 12 ein Differenzdruckregler 13 angeordnet. Der Differenzdruckregler 13 kommuniziert über eine in der Figur 1 nicht dargestellte Pilotleitung mit dem Kathodensystem 14. Der Differenzdruckregler 13 stellt einen vorgegebenen Differenzdruck zwischen dem Anodeneingang 6 und den Kathodensystem 14 des PEM-Brennstoffzellensystem 5 sicher.

Der Einlass 2 ist über ein Absperrventil 15 für Stickstoff mit einem Stickstoffreservoir 17 und über ein Absperrventil 16 für Wasserstoff mit einem Wasserstoffreservoir 18 verbunden.

In der Rezirkulationsleitung 10 befinden sich in Strömungsrichtung von der an dem Anodenabgaseinlass 7 hin zum Anodenauslass 4 des Anodenmoduls 1 nacheinander ein Rotameter 19, ein Wasserstoffpartialdrucksensor 20 und eine Rezirkulationspumpe 21.

Das Anodenmodul 1 weist eine in der Figur 1 nur schematisch angedeutete Reglereinheit 22 auf. Mit der Reglereinheit 22 stehen eine Steuerung des Spülventils 11, eine Steuerung des Versorgungsventils 12, eine Steuerung des Differenzdruckreglers 13, eine Steuerung des Absperrventils für Stickstoff 15, eine Steuerung für das Absperrventil 16 für Wasserstoff, ein Signalausgang des Rotameters 19, ein Signalausgang des Wasserstoffpartialdrucksensors 20 sowie eine Steuerung der Rezirkulationspumpe 21 im Sinne eines Regelkreises in Wirkverbindung. Die Verbindungen sind in der Figur 1 aus Gründen der Übersichtlichkeit nicht dargestellt.

Das PEM-Brennstoffzellensystem 5 weist eine Anode 23 und eine Kathode 24 auf. Zwischen die Anode 23 und die Kathode 24 des PEM-Brennstoffzellensystem 5 ist über einen Lastschalter 26 eine regulierbare Gleichstromlast 25 geschaltet. Das Brennstoffzellensystem 5 weist ein nur schematisch dargestelltes Kühlsystem 27 auf. Der Lastschalter 26 steht ebenfalls in Wirkverbindung mit der Reglereinheit 22 des Anodenmoduls 1.

Die Kathode 24 des PEM-Brennstoffzellensystems 5 ist über ein nur schematisch angedeutetes Kathodenmodul 28 versorgt.

Im Rahmen der Erfindung vermag die Reglereinheit 22 den Wasserstoffpartialdruck jedoch auch zu reduzieren, indem über das Absperrventil 15 Stickstoff aus dem Stickstoffreservoir 17 eingeleitet wird, um den Stickstoffpartialdruck hochzusetzen und infolgedessen den Wasserstoffpartialdruck herabzusetzen. Das erfindungsgemäße Verfahren, Anodenmodul 1 und PEM-Brennstoffzellensystem 5 ermöglichen es somit auch den Leerlaufbetrieb sowie das Herunterfahren des PEM-Brennstoffzellensystem 5 degradationsvermeidend, effizient und dynamisch zu gestalten.

Das erfindungsgemäße Anodenmodul 1 ermöglicht unterschiedliche Betriebsmodi. Zum einen ein Sackgassenbetrieb und zum anderen einen Rezirkulationsbetrieb. Beim Sackgassenbetrieb wird der Anode 23 Wasserstoff zugeführt und das Anodenabgas wird über den Abgasauslass 8 des Brennstoffzellensystem 5 in den Anodenabgaseinlass 7 des Anodenmoduls 1 durch das geöffnete Spülventil 11 durch die Anodenabgaseinlass 9 in die Umgebung ausgelassen.

Wenn im Sackgassenbetrieb eine ungleichförmige Verteilung von Wasserstoff im Anodensystem auftritt, kann das Anodenmodul 1 in den Rezirkulationsbetrieb geschaltet werden. Mit diesem kann erfindungsgemäß eine gleichförmigere Verteilung von Wasserstoff erreicht werden. Der Grund ist, dass Wasserstoff kontinuierlich im Anodensystem zirkuliert. Hierzu dient in dem erfindungsgemäßen Anodenmodul 1 zur Steuerung die Rezirkulationspumpe 21. Diese kann über die Reglereinheit 22 ein- oder ausgeschaltet werden.

Das erfindungsgemäße Anodenmodul 1 und das erfindungsgemäße Verfahren sind insbesondere für den Einsatz von PEM-Brennstoffzellensystemen 5 im Mobilitätssektor nützlich. Dies gilt insbesondere, wenn häufige Start/Stoppzyklen sowie veränderliche Betriebsanforderungen zu erwarten sind. Dies gilt insbesondere für luftfahrttechnische Anwendungen, wo ein schnelles Hochfahren der Leistung aus einem längeren Leerlaufzustand häufige Praxis ist.

Der Differenzdruckregler 13 ist als rücksteuerbares Druckregelventil ausgestaltet. Bei diesem wird zunächst wie bei einem herkömmlichen Differenzdruckregelventil durch die nicht dargestellte Pilotleitung bei in Folge eines Überschreitens des Kathodendrucks auftretenden übermäßigen Differenzdruck zwischen Anode und Kathode eine Membran ausgelenkt, welche ein Regelventil für die Öffnung der Betriebsgasleitung 3 weiter öffnet. Infolgedessen erhöht sich der Druck in der Betriebsgasleitung 3, sodass der Differenzdruck trotz Änderung des Kathodendrucks wieder im Soll-Bereich ist.

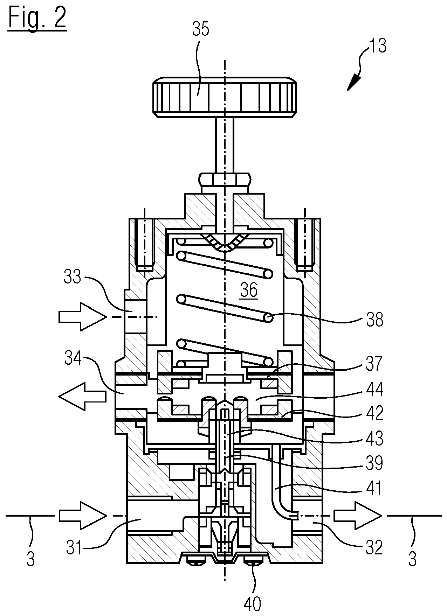

Andererseits ist aufgrund der Rücksteuerbarkeit des Differenzdruckventils 13 aber auch der umgekehrte Fall möglich. Bei diesem überschreitet der Druck in der Betriebsgasleitung 3 den Kathodendruck so stark, dass der Differenzdruck zwischen Anode und Kathode außerhalb der Sollbereichs liegt. Dies führt dazu, dass die Membran in die Gegenrichtung ausgelenkt wird. Aufgrund der Bauweise des rücksteuerbaren Differenzdruckventils 13 wird dadurch ein in der Figur nicht dargestelltes Ablassventil zum Ablassen von Betriebsgas aus der Betriebsgasleitung 3 geöffnet. Diese Verhältnisse sind weiter unten detaillierter im Zusammenhang mit Figur 2 beschrieben.

Zurückkommend wiederum auf Figur 1 ist erkennbar, dass bei dem erfindungsgemäßen Anodenmodul 1 eine Entlüftungsleitung 29 von dem in der Figur 1 nicht erkennbaren Ablassventil des Differenzdruckreglers 13 zu der Anodenabgasauslassleitung 9 geführt ist. Die Entlüftungsleitung 29 mündet stromabwärts von dem Spülventil 11 in die Anodenabgasauslassleitung 9.

Weiter ist in Figur 1 zu erkennen, dass das erfindungsgemäße Anodenmodul 1 stromabwärts von dem Versorgungsventil 12, aber stromaufwärts von dem Differenzdruckregler 13, einen Druckschalter 30 aufweist. Dieser steht in unmittelbarer Wirkverbindung mit dem Absperrventil 15 für Stickstoff. Die Wirkverbindung ist in der Figur 1 aus Gründen der Übersichtlichkeit nicht dargestellt. Der Druckschalter kann zusätzlich auch mit der Reglereinheit 22 in Wirkverbindung stehen.

Die Figur 2 zeigt im Detail einen Differenzdruckregler, wie er in einem erfindungsgemäßen Anodenmodul 1, wie es beispielsweise in Figur 1 erläutert ist, zum Einsatz kommt. Der Differenzdruckregler 13 ist rücksteuerbar ausgestaltet, wie nachfolgend erläutert wird.

Zunächst ist im unteren Teil der Figur 2 zu erkennen, dass die Betriebsgasleitung 3 des erfindungsgemäßen Anodenmoduls 1 an einen Eingang 31 des Differenzdruckreglers 13 angeschlossen ist. Weiter ist ein Ausgang 32 des Differenzdruckreglers 13 ebenfalls an die Betriebsgasleitung 3 angeschlossen. Im oberen Teil des Differenzdruckreglers 13 gemäß Figur 2 ist ein Signaleingang 33 zu erkennen.

An den Signaleingang 33 des Differenzdruckreglers 13 ist die in den Figuren nicht dargestellte Pilotleitung, welche mit der Kathode 24 des PEM-Brennstoffzellenstacks 5 kommuniziert, angeschlossen. Weiter weist der Differenzdruckregler 13 gemäß Figur 2 einen Entlüftungsauslass 34 auf. Somit weist der Differenzdruckregler 13 insgesamt vier verfahrenstechnische Schnittstellen auf.

Ferner weist der Differenzdruckregler 13 ein Handrad 35 auf. Das Handrad 35 ermöglicht es, die Druckdifferenz zwischen dem am Signaleingang 33 anliegenden Steuersignal, nämlich dem statischen Druck an der Kathode 24 des PEM-Brennstoffzellenstacks 5, und dem Ausgang 32 des Druckreglers 13 einzustellen. Dabei herrscht am Ausgang 32 des Differenzdruckreglers 13 der Druck des Betriebsgases, welcher am Anodeneingang 6 des PEM-Brennstoffzellenstacks 5 anliegt.

Wie in der Figur 2 andeutungsweise zu erkennen, ist der Pilotdruckraum 36 über die nicht dargestellte Pilotleitung, welche über den Signaleingang 33 mit der Kathode 24 kommuniziert, mit dem an der Kathode 24 anliegenden Druck beaufschlagt. Dadurch wird die obere Membran 37 des Differenzdruckreglers 13 ebenfalls mit diesem Druck beaufschlagt. Zusätzlich ist die obere Membran 37 über die Feder 38, deren Vorspannung über das Handrad 35 einstellbar ist, mit einem Druck beaufschlagt. Auf diese Weise übt die obere Membran 37 auf das Regelstößel 39 eine Kraft aus. An das Regelstößel 39 ist das Ventil 40 gekoppelt. Und wird durch diesen bei Auslenkung nach unten geöffnet.

Außerdem wirkt durch ein Atemrohr 41 der am Ausgang 33 herrschende Ausgangsdruck auch die untere Membrane 42. Auf diese Weise entspricht der Ist-Wert des Differenzdruckreglers 13 dem auf die untere Membran 42 wirkenden Druck, welcher wiederum dem Druck am Ausgang 33 des Differenzdruckreglers 13 entspricht. Andererseits entspricht der Soll-Wert für den Druck der Summe aus dem im Pilotdruckraum 36 herrschenden Druck, welcher über die nicht dargestellte Pilotleitung mit der Kathode 24 kommuniziert und der über das Handrad 35 auf die Feder 38 eingebrachten Vorspannung.

In einem normalen Betriebszustand wird nun das Ventil 40 mehr oder weniger durch Auslenkung nach unten geöffnet sein oder auch vollständig geschlossen sein, da die Summe aus dem Gasdruck im Pilotdruckraum 36, welche dem Druck an der Kathode 24 des PEM-Brennstoffzellenstabes 5 entspricht, und der durch die Feder zusätzlich ausgeübten Kraft größer oder gleich dem Druckbereich der unteren Membran 42 ist. Bei diesen Betriebszuständen genügt es, den Druck am Ausgang 32 allmählich abfallen zu lassen durch Umsetzung an der Anode 23 aufgrund der elektrochemischen Reaktion.

Wenn nun aber ein plötzlicher Druckabfall auf Seiten der Kathode 24 auftritt, kehren sich die Druckverhältnisse in dem Differenzdruckregler 13 um. In diesem Falle ist der Druck unterhalb der unteren Membran 42 größer als die Summe aus dem durch die Feder 38 ausgeübten Druck und dem Druck im Pilotdruckraum 36. In diesem Fall wird die untere Membran 42 und die obere Membran 37 in der Figur nach oben ausgelenkt. Da sich in dem Regelstößel 39 eine im Einzelnen nicht zu erkennende Ausblasöffnung 43 zu dem Ventilzwischenraum 44 befindet, tritt bei diesem Betriebszustand Betriebsgas aus dem Raum unterhalb der unteren Membran 42 in den Ventilzwischenraum 44 zwischen der unteren Membran 42 und der oberen Membran 37.

In den Ventilzwischenraum 44 eingetretenes Betriebsgas tritt aus diesem über den Entlüftungsauslass 34 aus. Da der Entlüftungsauslass 34, wie in Figur 1 zu erkennen, an die Entlüftungsleitung 39 angeschlossen ist, tritt somit Gas durch den Differenzdruckregler 13 über die Entlüftungsleitung 29 zu der Anodenabgasauslassleitung 9 in die Umgebung. Dadurch vermindert sich sprunghaft der Druck unterhalb der unteren Membran 42, sodass der normale Regelbetrieb des Differenzdruckreglers 13 wieder eingreift. Bei diesem wird der Regelstößel 39 nach unten ausgelenkt, um das Ventil 40 mehr oder weniger zu öffnen, um eine Verbindung zwischen dem Eingang 31 und dem Ausgang 32 des Differenzdruckreglers 13 herzustellen.

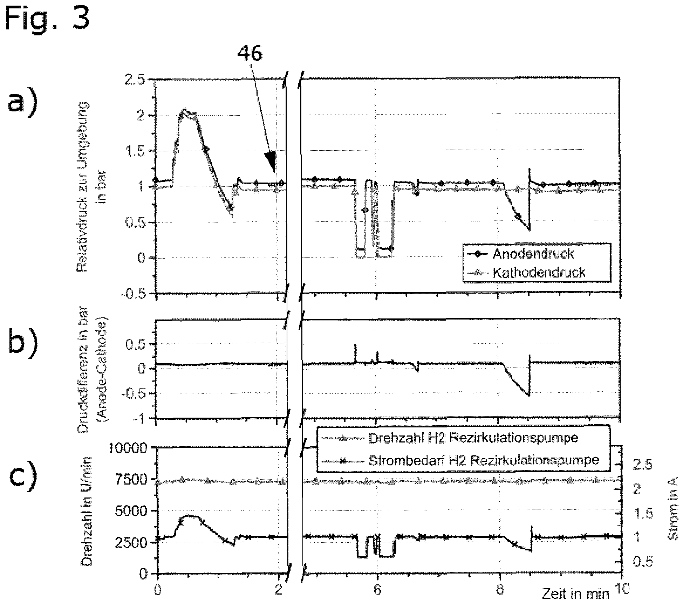

Die Figur 3 zeigt schematisch den zeitlichen Verlauf eines beispielhaften Verfahrens unter Verwendung des erfindungsgemäßen Anodenmoduls. In Figur 3 (a) sind der Anodendruck und der Kathodendruck relativ zur Umgebung aufgetragen. In Figur 3 (b) ist der Differenzdruck Anode minus Kathode aufgetragen. Schließlich ist in Figur 3 (c) die Drehzahl der Drehzirkulationspumpe 21 in der dritten Zirkulationsleitung 10 im zeitlichen Verlauf aufgetragen. Außerdem ist in Figur 3 (c) der der Rezirkulationspumpe 21 zugeführte Steuerstrom aufgetragen. In den Figuren 3 ist auf der horizontalen Achse die Zeit in Minuten aufgetragen.

Anhand der Figur 3 werden die folgenden Betriebsmodi bzw. Zustände veranschaulicht und erläutert, und die Wirkung des erfindungsgemäßen Anodenmoduls erläutern.

Zunächst zeigt das Zeitintervall von 0 bis 2 Minuten eine Variation des kathodenseitigen Drucks. Wie in Figur 3 (a) zu erkennen, variiert der Kathodendruck in dem Zeitfenster von 0 bis 1,5 Minuten von 1 bis etwa 2 bzw. 0,5 relativ zur Umgebung. Dabei passt sich der Anodendruck aufgrund der Wirkungsweise des Differenzdruckreglers 13 dem Kathodendruck an, um einen im Wesentlichen konstanten Differenzdruck zu erreichen. Der im wesentlichen gleichbleibende Differenzdruck ist in Figur 3 (b) in dem besagten Zeitfenster von 0 bis 2 Minuten zu erkennen. Da die Variation des Kathodendrucks bei dem Verfahrensverlauf zwischen 0 und 2 Minuten nicht abrupt erfolgt, vermag der Differenzdruckregler 13 aufgrund der insbesondere mit Bezug auf Figur 2 erläuterten Wirkungsweise die Druckschwankungen auf der Kathodenseite durch entsprechende Erhöhung der Wasserstoffzufuhr auf der Anodenseite zu kompensieren, um den zum Schonen der Zellmembranen angestrebten Differenzdruck zwischen Kathode und Anode sicherzustellen.

Auch der allmähliche Abfall des Drucks am Kathodeneingang ab etwa 0,8 Minuten bis etwa 1,5 Minuten kann kompensiert werden durch Verbrauch von Wasserstoff in dem PEM-Brennstoffzellensystem 5. Dies ist möglich, da der Druckabfall an der Kathode 24 sich nur allmählich vollzieht. Der hier beschriebene Ablauf vollzieht sich in dem ersten Zeitintervall 45 gemäß Figur 3.

Weiter zeigt die Figur 3, dass ein Öffnen des Spülventils 11 auf 10 % bei dem in Figur 1 beispielhaft gezeigten Anodenmodul 1 bei 2 Minuten entsprechend dem Ereignis 46 in Figur 3 ebenfalls zu keiner nennenswerten Veränderung im Differenzdruck gemäß Figur 3 (b) führt.

Dabei ist aus Gründen der Darstellung ein Zeitintervall zwischen zwei Minuten und sechs Minuten nicht gezeigt.

In dem zweiten Zeitintervall 47 von etwa fünfeinhalb Minuten bis sechseinhalb Minuten ist die Reaktion des Systems gemäß der Erfindung auf einen Fehler auf der Kathodenseite veranschaulicht. Wie zu erkennen, erfolgt zweimal hintereinander ein sprunghafter Abfall des Kathodendrucks. Vergleiche dazu Figur 3 (a). Dieser kann ausweislich Figur 3 (b) in dem zweiten Zeitintervall 47 jedoch aufgrund der erfindungsgemäßen Wirkungsweise der Druckausgleichsmittel in Form der Entlüftung des Anodensystems über den Entlüftungsauslass 34, welcher in den Differenzdruckregler 13 integriert ist, nahezu ohne Zeitverzug vollständig kompensiert werden, sodass ausweislich Figur 3 (b) mit Ausnahme einer zeitlich schmalen Spitze keine merkliche Veränderung in dem Differenzdruck zwischen der Anode 23 und der Kathode 24 auftritt.

In dem dritten Zeitintervall 48 ist andererseits das Verhalten des erfindungsgemäßen Anodenmoduls 1 bei einem abrupten Ausfall der Wasserstoffzufuhr auf der Anodenseite veranschaulicht. Demnach konnte ein Ausfall der Wasserstoffversorgung, der sich ausweislich Figur 3 (a) in dem dritten Zeitintervall 48 durch einen entsprechenden Abfall des Anodendrucks äußert, und der außerdem zunächst gemäß Figur 3 (b) auch zu einem Abfall des Differenzdrucks zwischen Anode 23 und Kathode 24 führt, durch eine automatisierte Nachführung von Stickstoff über das Stickstoffreservoir 17 durch plötzliches Öffnen des Absperrventils 15 für Stickstoff kompensiert werden. Dazu schaltet der Druckschalter 30 in der Betriebsgasleitung 3 das Absperrventil 15 für Stickstoff, um über den Einlass 2 und das Versorgungsventil 12 des erfindungsgemäßen Anodenmoduls 1 den durch den Wegfall der Versorgung mit Wasserstoff aus dem Reservoir 18 eingetretenen Druckabfall zu kompensieren. Nach nur geringem Zeitverzug befindet sich der Differenzdruck gemäß Figur 3 (b) am Ende des Ereignisses gemäß dem dritten Zeitintervall 48 wieder in dem angestrebten Sollbereich, bei dem eine Schädigung der Zellmembranen vermieden wird.

### BEZUGSZEICHENLISTE

- 1: Anodenmodul
- 2: Einlass
- 3: Betriebsgasleitung
- 4: Anodenauslass
- 5: PEM-Brennstoffzellenstapel
- 6: Anodeneingang
- 7: Anodenabgaseinlass
- 8: Abgasauslass
- 9: Anodenabgasauslassleitung
- 10: Rezirkulationsleitung
- 11: Spülventil
- 12: Versorgungsventil
- 13: Differenzdruckregler
- 14: Kathodensystem
- 15: Absperrventil für N₂
- 16: Absperrventil für H₂
- 17: N₂-Reservoir
- 18: H₂-Reservoir
- 19: Rotameter
- 20: Wasserstoffpartialdrucksensor
- 21: Rezirkulationspumpe
- 22: Reglereinheit
- 23: Anode
- 24: Kathode
- 25: Gleichstromlast
- 26: Lastschalter
- 27: Kühlsystem
- 28: Kathodenmodul
- 29: Entlüftungsleitung
- 30: Druckschalter
- 31: Eingang
- 32: Ausgang
- 33: Signaleingang
- 34: Entlüftungsauslass
- 35: Handrad
- 36: Pilotdruckraum
- 37: Obere Membran
- 38: Feder
- 39: Regelstößel
- 40: Ventil
- 41: Atemrohr
- 42: Untere Membran
- 43: Auslassöffnung
- 44: Ventilzwischenraum
- 45: Erstes Zeitintervall
- 46: Ereignis
- 47: Zweites Zeitintervall
- 48: Drittes Zeitintervall

## Patentansprüche

1. Anodenmodul (1) für ein Polymerelektrolytbrennstoffzellensystem (5) mit einer Anode (23) und einer Kathode (24), umfassend mindestens einen Einlass (2) zur Einleitung von Betriebsgas in eine Betriebsgasleitung (3) und einen mit der Betriebsgasleitung (3) kommunizierenden Anodenauslass (4) zum Anschließen an einen Anodeneingang (6) des
Polymerelektrolytbrennstoffzellensystems (5), wobei die Betriebsgasleitung (3) mit Differenzdruckregelungsmitteln (13) zum Regeln einer vorgegebenen Druckdifferenz der Betriebsgasleitung (3) am Anodenauslass (4) gegenüber der Kathode (24) versehen ist, wobei die Differenzdruckregelungsmittel (13) einen Signaleingang (33) für ein einen Kathodendruck kennzeichnendes Steuersignal und Stellmittel (39, 40) zum Beeinflussen eines Betriebsgasdrucks in der Betriebsgasleitung (3) aufweisen, **dadurch gekennzeichnet, dass** Druckausgleichsmittel (43, 34, 29, 30, 15) zum Ausgleichen eines sprunghaften Ansteigens des Betrags der Druckdifferenz vorgesehen sind.

2. Anodenmodul (1) nach Anspruch 1, **dadurch gekennzeichnet, dass** die Druckausgleichsmittel (43, 34, 29) zum Abführen von Betriebsgas in die Umgebung ausgestaltet sind.

3. Anodenmodul (1) nach Anspruch 1 oder 2, **dadurch gekennzeichnet, dass** die Druckausgleichsmittel (43, 34, 29) eine Entlüftungsleitung (29) für Betriebsgas umfassen.

4. Anodenmodul (1) nach einem der vorhergehenden Ansprüche,
**dadurch gekennzeichnet, dass** die Entlüftungsleitung (29) unmittelbar mit der Umgebung kommuniziert.

5. Anodenmodul (1) nach einem der vorhergehenden Ansprüche, **dadurch gekennzeichnet, dass** der Signaleingang (33) als mit der Kathode (24) kommunizierende Pilotgasleitung ausgestaltet ist.

6. Anodenmodul (1) nach einem der vorhergehenden Ansprüche, **dadurch gekennzeichnet, dass** die Druckausgleichsmittel (43, 34, 29, 30, 15) zum selbsttätigen Ausgleichen in Reaktion auf das sprunghafte Ansteigen ausgebildet sind.

7. Anodenmodul (1) nach einem der vorhergehenden Ansprüche, **dadurch gekennzeichnet, dass** die Druckausgleichsmittel (43, 34, 29, 30, 15) mit den Stellmitteln (39, 40), insbesondere mechanisch, in Wirkverbindung stehen.

8. Anodenmodul (1) nach einem der vorhergehenden Ansprüche, **dadurch gekennzeichnet, dass** die Druckausgleichsmittel (43, 34, 29) mit den Differenzdruckregelungsmitteln (13) integriert ausgestaltet sind, wobei die Differenzdruckregelungsmittel (13) vorzugsweise als rücksteuerbares Differenzdruckventil ausgestaltet sind.

9. Anodenmodul (1) nach einem der vorhergehenden Ansprüche, **dadurch gekennzeichnet, dass** die Druckausgleichsmittel (30, 15) zum Zuführen von Betriebsgas, insbesondere eines Inertgases, vorzugsweise Stickstoff, in die Betriebsgasleitung (3) ausgestaltet sind.

10. Anodenmodul (1) nach einem der vorhergehenden Ansprüche, **dadurch gekennzeichnet, dass** die Druckausgleichsmittel zum Öffnen einer zwischen die Anode (23) und die Kathode (24) des Polymerelektrolytbrennstoffzellensystems (5) geschalteten elektrischen Spannungsbegrenzungslast (25) ausgestaltet sind.

11. Polymerelektrolytbrennstoffzellensystem (5) mit einem Anodenmodul (1) nach einem der vorhergehenden Ansprüche.
